# EUROPEAN PATENT APPLICATION

(11) **EP 4 700 109 A1**
(43) Date of publication of application: **25.02.2026**
(21) Application number: 24792470.7
(22) Date of filing: 29.03.2024
(51) Int. Cl.: C12C 7/04, A23L 2/00, C12C 7/047, C12C 11/00, C12C 12/04, C12H 3/02

(54) **FERMENTED BEVERAGE AND METHOD FOR PRODUCING SAME**

(30) Priority: 20.04.2023 JP 2023069088
(71) Applicant: Asahi Group Holdings, Ltd., Tokyo 130-8602 (JP); Asahi Breweries, Ltd., Tokyo 130-8602 (JP)
(72) Inventor: YAMAMOTO, Akane, Moriya-shi, Ibaraki 302-0106 (JP); OKADA, Keisuke, Moriya-shi, Ibaraki 302-0106 (JP)
(74) Representative: Müller-Boré & Partner Patentanwälte PartG mbB
(86) International application number: PCT/JP2024/013107
(87) International publication number: WO 2024/219194

(57) **Abstract**

The present invention relates to [1] a method for producing a fermented beverage, including a preparation step of obtaining a saccharified liquid from a starch raw material, a fermentation step of fermenting the obtained saccharified liquid with yeast to obtain a fermented liquid, and a dilution step of diluting the obtained fermented liquid with water, in which, in the preparation step, an enzyme for producing a non-assimilable sugar from an assimilable sugar and an enzyme for hydrolyzing dextrin are added, and [2] a fermented beverage having an alcohol concentration of less than 4.0 vol%, a raw wort extract concentration of less than 10 mass%, a dextrin concentration of 10.0 g/L or less, and a degree of sweetness of 5 or more.

## Description

### Technical Field

The present invention relates to a fermented beverage and a method for producing the same.

This application claims priority based on Japanese Patent Application No. 2023-069088 filed in Japan on April 20, 2023, the contents of which are incorporated herein.

### Background Art

In recent years, the needs of consumers for beer-taste beverages such as low-alcohol beers having a beer-like taste and a low alcohol concentration or non-alcoholic beers substantially containing no alcohol are growing. These beer-taste beverages are those that are generally drunk as substitutes for beers when beers having high alcohol concentrations cannot be drunk, and therefore, they preferably have a taste similar to that of beers except the alcohol concentration. On this account, development of beer-taste beverages having a taste more similar to that of beers has been desired.

As a method for producing a beer-taste beverage having a low alcohol concentration, a method including a preparation step in which α-glucosidase (transglucosidase) is added to a saccharified liquid before fermentation to convert a fermentable sugar to a non-fermentable sugar is known (see, for example, Patent Literature 1 or Patent Literature 2).

On the other hand, isomalto-oligosaccharide synthesized from a fermentable sugar with transglucosidase has a certain degree of sweetness though the degree of sweetness is low as compared with that of sucrose. On this account, in the method for producing a beer-taste beverage including adding transglucosidase, outstanding sweetness is also imparted when isomalto-oligosaccharide is incorporated into a product in such a sufficient amount as to obtain a full-bodied flavor and a body feeling similar to those of usual beers, and there was a problem that the degree of harmony of a taste and a flavor for a beer-taste beverage is undesirable.

Regarding this problem, Patent Literature 3 discloses a method for producing a low-alcohol fermented malt beverage, including adding an organic acid so that pH of the final product will become 3.5 to 4.4 for the purpose of providing a method for producing a low-alcohol fermented malt beverage that has well-balanced taste and flavor comparable to those of usual beers without producing outstanding sweetness or other unnatural tastes.

Patent Literature 4 discloses a method for producing a low-alcohol beer-taste beverage, including adjusting a bitterness unit of the extract of the final product within a predetermined range for the purpose of providing a method for producing a low-alcohol beer-taste beverage that has a sufficient full-bodied flavor, has an excellent taste, and has increased drinkability.

### Citation List

### Patent Literatures

Patent Literature 1: JP 5-68528 A
Patent Literature 2: JP 5-68529 A
Patent Literature 3: JP 2012-239460 A
Patent Literature 4: JP 2015-133924 A

### Summary of Invention

### Technical Problem

Beer-taste beverages produced by adding transglucosidase have, in addition to the above problem, a problem that because of a low alcohol concentration, grain aroma derived from malt relatively stands out. By carrying out dilution according to the alcohol concentration, it becomes possible to achieve a balance of the intensity of grain aroma, but this causes a problem that the body feeling is impaired at the same time, resulting in a thin taste. It has become clear that the techniques of Patent Literature 3 and Patent Literature 4 have room for improvement in the balance of the intensity of grain aroma and the body feeling.

The present invention is contemplated for providing a fermented beverage that is excellent in a balance of the intensity of grain aroma, and a body feeling even with its low alcohol concentration, and a method for producing the same.

### Solution to Problem

The present inventors have focused on the fact that in beer-taste beverages having a low alcohol concentration, saccharides having a high degree of sweetness contribute to an enhancement of a body feeling more greatly than dextrin, and they have found that the above problem can be solved by adding an enzyme for producing a non-assimilable sugar from an assimilable sugar and an enzyme for hydrolyzing dextrin in the preparation step of obtaining a saccharified liquid from a starch raw material and further by including the dilution step of diluting the obtained fermented liquid with water.

That is to say, the present invention provides the following [1] to [15].
[1] A method for producing a fermented beverage, including
   a preparation step of obtaining a saccharified liquid from a starch raw material,
   a fermentation step of fermenting the obtained saccharified liquid with yeast to obtain a fermented liquid, and
   a dilution step of diluting the obtained fermented liquid with water,
   wherein, in the preparation step, an enzyme for producing a non-assimilable sugar from an assimilable sugar and an enzyme for hydrolyzing dextrin are added.
[2] The method for producing a fermented beverage according to the above [1], wherein the non-assimilable sugar is isomalto-oligosaccharide.
[3] The method for producing a fermented beverage according to the above [1] or [2], wherein the enzyme for producing a non-assimilable sugar from an assimilable sugar contains transglucosidase.
[4] The method for producing a fermented beverage according to any one of the above [1] to [3], wherein the enzyme for hydrolyzing dextrin contains at least one selected from the group consisting of an enzyme for hydrolyzing an α-1,6 glucoside bond of dextrin and an enzyme for hydrolyzing an α-1,4 glucoside bond of dextrin.
[5] The method for producing a fermented beverage according to the above [4], wherein the enzyme for hydrolyzing an α-1,6 glucoside bond of dextrin contains pullulanase.
[6] The method for producing a fermented beverage according to the above [4], wherein the enzyme for hydrolyzing an α-1,4 glucoside bond of dextrin contains maltogenic α-amylase.
[7] The method for producing a fermented beverage according to the above [4], wherein the enzyme for hydrolyzing an α-1,4 glucoside bond of dextrin contains heat-resistant α-amylase.
[8] The method for producing a fermented beverage according to any one of the above [1] to [7], wherein the starch raw material contains malt.
[9] The method for producing a fermented beverage according to any one of the above [1] to [8], wherein the fermented beverage is a beer-taste beverage.
[10] The method for producing a fermented beverage according to any one of the above [1] to [9], wherein the fermented beverage has an alcohol concentration of less than 4.0 vol%.
[11] The method for producing a fermented beverage according to any one of the above [1] to [10], wherein, in the dilution step, a raw wort extract concentration is adjusted to less than 10 mass%.
[12] The method for producing a fermented beverage according to any one of the above [1] to [11], wherein the fermented beverage has a dextrin concentration of 10.0 g/L or less.
[13] The method for producing a fermented beverage according to any one of the above [1] to [12], wherein the fermented beverage has a degree of sweetness of 5 or more.
[14] The method for producing a fermented beverage according to any one of the above [1] to [13], containing a step of removing an alcohol from the fermented liquid.
[15] A fermented beverage having
   an alcohol concentration of less than 4.0 vol%,
   a raw wort extract concentration of less than 10 mass%,
   a dextrin concentration of 10.0 g/L or less, and
   a degree of sweetness of 5 or more.

### Advantageous Effects of Invention

The present invention can provide a fermented beverage that is excellent in a balance of the intensity of grain aroma, and a body feeling even with its low alcohol concentration, and a method for producing the same can be provided.

### Brief Description of Drawing

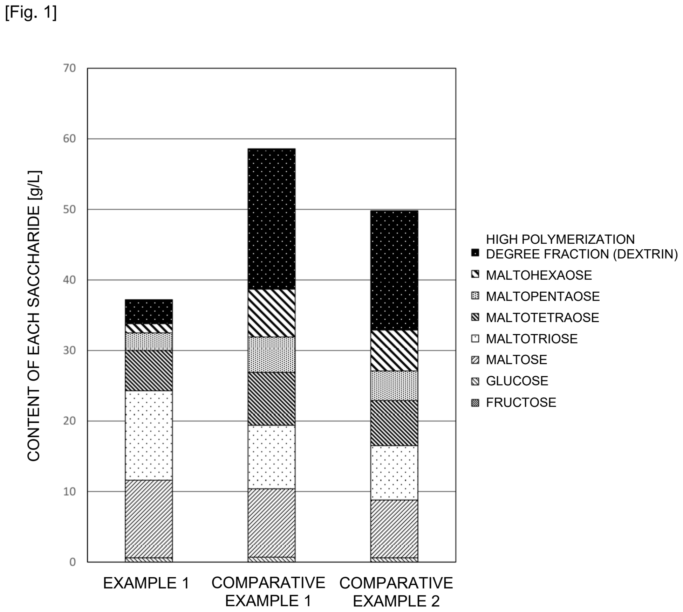

[Fig. 1] Fig. 1 shows contents of saccharides in the fermented beverages of Example 1, Comparative Example 1, and Comparative Example 2.

### Description of Embodiments

### [Method for producing fermented beverage]

The method for producing a fermented beverage of the present invention is a production method including a preparation step of obtaining a saccharified liquid from a starch raw material, a fermentation step of fermenting the obtained saccharified liquid with yeast to obtain a fermented liquid, and a dilution step of diluting the obtained fermented liquid with water, in which, in the preparation step, an enzyme for producing a non-assimilable sugar from an assimilable sugar and an enzyme for hydrolyzing dextrin are added.

In the present invention, "dextrin" means an oligosaccharide or a polysaccharide, each being a hydrolyzate of starch and having a polymerization degree of glucose of 7 or more.

According to the method for producing a fermented beverage of the present invention, a fermented beverage that is excellent in a balance of the intensity of grain aroma, and a body feeling even with the fermented beverage's low alcohol concentration can be obtained. The reason therefore is not clear, but can be considered as follows.

It has been conventionally thought that sweetness or dextrin contributes to an enhancement of a body feeling (full-bodied flavor, rich taste) of a beer-taste beverage. According to the studies by the present inventors, however, knowledge that in beer-taste beverages having a low alcohol concentration, saccharides having a high degree of sweetness contribute to an enhancement of a body feeling more greatly than dextrin has been acquired. From this knowledge, it can be thought that by adding an enzyme for hydrolyzing dextrin in addition to the enzyme for producing a non-assimilable sugar from an assimilable sugar in the preparation step of obtaining a saccharified liquid from a starch raw material in the present invention, a low-molecular saccharide can be present instead of dextrin that is present in the conventional beer-taste beverage, and as a result, the effect of enhancing a body feeling has been obtained. Then, it can be thought that since the dilution step of diluting the obtained fermented liquid with water is included, the intensity of grain aroma can be suppressed to achieve a balance of the grain aroma without impairing a body feeling, and therefore, a fermented beverage that is excellent in a balance of the intensity of grain aroma, and a body feeling even with the fermented liquid's low alcohol concentration can be obtained.

### <Preparation step>

The production method of the present invention includes a preparation step of obtaining a saccharified liquid from a starch raw material (hereinafter, also referred to simply as a "preparation step").

In the preparation step, it is preferable to obtain the saccharified liquid by preparing a mixture containing a starch raw material and raw material water (hereinafter, also referred to as "maische") and heating it to perform saccharification treatment in which starch of the starch raw material is saccharified.

In the production method of the present invention, an enzyme for producing a non-assimilable sugar from an assimilable sugar and an enzyme for hydrolyzing dextrin are added in the preparation step from the viewpoint of adjusting an alcohol concentration and the viewpoint of enhancing a body feeling.

### (Starch raw material)

In the present invention, the starch raw material is not particularly restricted as long as it is a fermentation raw material containing starch, but preferably, it contains malt.

The malt for use in the present invention is preferably, for example, at least one selected from the group consisting of barley malt, wheat malt, rye malt, and oat malt. The malt can be obtained by germinating barley, wheat, rye, oat, etc., through general malting processing. Specifically, the malt can be produced by immersing harvested barley, wheat, rye, oat, etc., in water to appropriately germinate them and then dry-roasting them with hot air. The malt may be used as a crushed material obtained by crushing the malt in a usual way.

Examples of the starch raw materials other than malt include barley, wheat, cornstarch, corn grits, rice, and kaoliang.

The starch raw materials may be used singly or in combination of two or more.

The ratio of the malt used in the starch raw material is preferably 25 mass% or more and 100 mass% or less, more preferably 40 mass% or more, even more preferably 50 mass% or more, and more preferably 90 mass% or less, even more preferably 80 mass% or less.

From the viewpoint of an enhancement of a body feeling, the ratio of the malt used is preferably the above-mentioned lower limit or more, and from the viewpoint of adjusting a balance of a taste, it is preferably the above-mentioned upper limit or less.

In the preparation step, carbohydrate raw materials, such as liquid sugar and sugar, may be added in addition to the starch raw material. The liquid sugar is produced by decomposing starch with an acid or a diastatic enzyme and saccharifying it, and mainly, glucose, fructose, sucrose, maltose, maltotriose, and the like are included.

The carbohydrate raw materials may be used singly or in combination of two or more.

### (Enzyme for producing non-assimilable sugar from assimilable sugar)

In the preparation step, by adding an enzyme for producing a non-assimilable sugar from an assimilable sugar, the assimilable sugar is converted to a non-assimilable sugar. Specifically, assimilable sugars, such as glucose, fructose, sucrose, maltose, and maltotriose, are converted to non-assimilable sugars, such as kojibiose, nigerose, isomaltose, erlose, panose, and isomaltotriose. Of these, isomalto-oligosaccharide is preferable as the non-assimilable sugar produced with the enzyme from the viewpoint of adjusting an alcohol concentration and the viewpoint of enhancing a body feeling.

The isomalto-oligosaccharide is an oligosaccharide having glucose as a constituent sugar, having at least one or more of α-1,6 bond, α-1,2-bond, α-1,3-bond, and the like in a molecule, and having a polymerization degree of 2 or more and 10 or less. Examples of the isomalto-oligosaccharides include isomaltose, isomaltotriose, and panose.

In the present invention, the non-assimilable sugar is not utilized for the fermentation in the fermentation step and can suppress production of an alcohol, so that the alcohol concentration of the resulting fermented beverage can be decreased.

The enzyme for producing a non-assimilable sugar from an assimilable sugar preferably includes transglucosidase from the viewpoint of adjusting an alcohol concentration.

The transglucosidase is not particularly restricted as long as it is an enzyme having a catalytic activity against transglucosylation reaction, and transglucosidases derived from various organisms can be optionally used. The shape thereof may be any of a liquid, a powder, a carrier-immobilized shape, etc. Commercially available transglucosidase may be used. Commercially available transglucosidase is, for example, Transglucosidase L "Amano" (manufactured by Amano Enzyme Inc.).

Transglucosidase can be also used singly or in combination of two or more.

From the viewpoint of adjusting an alcohol concentration, the additive amount of the enzyme for producing a non-assimilable sugar from an assimilable sugar is preferably 0.05 part by mass or more and 1 part by mass or less, more preferably 0.1 part by mass or more, even more preferably 0.2 part by mass or more, and more preferably 0.8 part by mass or less, even more preferably 0.6 part by mass or less, based on 100 parts by mass of the starch raw material, in the case where, for example, transglucosidase (Transglucosidase L "Amano" manufactured by Amano Enzyme Inc.) is added.

The time of addition of the enzyme for producing a non-assimilable sugar from an assimilable sugar is not particularly restricted as long as the reaction with the enzyme added is sufficiently carried out before the end of the preparation step. For example, when transglucosidase is used as the enzyme for producing a non-assimilable sugar from an assimilable sugar, the transglucosidase may be added together with the starch raw material during the preparation of a mixture containing the starch raw material and raw material water (maische), or may be added during the saccharification treatment of starch of the starch raw material. In the present invention, from the viewpoint of allowing the enzyme reaction to sufficiently proceed, it is preferable to add transglucosidase at an early stage of the preparation step, and it is more preferable to add it during the preparation of maische in the preparation step.

### (Enzyme for hydrolyzing dextrin)

By adding an enzyme for hydrolyzing dextrin in the preparation step, dextrin produced when starch of the starch raw material is saccharified is hydrolyzed and thereby converted to a monosaccharide, a disaccharide, and an oligosaccharide.

The enzyme for hydrolyzing dextrin is not particularly restricted as long as it is an enzyme for hydrolyzing an α-1,6 glucoside bond or an α-1,4 glucoside bond of dextrin.

Examples of the enzymes for hydrolyzing an α-1,6 glucoside bond of dextrin include pullulanase and isoamylase, and pullulanase is preferably included.

Examples of the enzymes for hydrolyzing an α-1,4 glucoside bond of dextrin include α-amylase and β-amylase, and α-amylase is preferably included. As the α-amylase, at least one selected from the group consisting of heat-resistant α-amylase and maltogenic α-amylase is preferably included.

An enzyme for hydrolyzing an α-1,4 glucoside bond and an α-1,6 glucoside bond of dextrin is, for example, glucoamylase.

From the viewpoint of decreasing the concentration of dextrin and thereby enhancing a body feeling, the enzyme for hydrolyzing dextrin preferably includes at least one selected from the group consisting of an enzyme for hydrolyzing an α-1,6 glucoside bond of dextrin and an enzyme for hydrolyzing an α-1,4 glucoside bond of dextrin, more preferably includes an enzyme for hydrolyzing an α-1,6 glucoside bond of dextrin and an enzyme for hydrolyzing an α-1,4 glucoside bond of dextrin, even more preferably includes pullulanase and α-amylase, and even much more preferably includes pullulanase, heat-resistant α-amylase, and maltogenic α-amylase, among the above enzymes.

From the viewpoint of decreasing the concentration of dextrin and thereby enhancing a body feeling, the additive amount of the enzyme for hydrolyzing dextrin is preferably 0.05 part by mass or more and 1 part by mass or less, more preferably 0.1 part by mass or more, even more preferably 0.2 part by mass or more, and more preferably 0.8 part by mass or less, even more preferably 0.6 part by mass or less, based on 100 parts by mass of the starch raw material, in the case where, for example, a composite enzyme of pullulanase, heat-resistant α-amylase, and maltogenic α-amylase ("Ceremix (registered trademark) Flex" manufactured by Novozymes A/S) is added.

The time of addition of the enzyme for hydrolyzing dextrin is not particularly restricted as long as the reaction with the enzyme added is sufficiently carried out before the end of the preparation step. For example, when a composite enzyme of pullulanase, heat-resistant α-amylase, and maltogenic α-amylase ("Ceremix (registered trademark) Flex" manufactured by Novozymes A/S) is used as the addition of the enzyme for hydrolyzing dextrin, the composite enzyme of pullulanase, heat-resistant α-amylase, and maltogenic α-amylase may be added together with the starch raw material during the preparation of a mixture containing a starch raw material and raw material water (maische), or may be added during the saccharification treatment of starch of the starch raw material. In the present invention, from the viewpoint of allowing the enzyme reaction to sufficiently proceed, it is preferable to add a composite enzyme of pullulanase, heat-resistant α-amylase, and maltogenic α-amylase at an early stage of the preparation step, and it is more preferable to add it during the preparation of maische in the preparation step.

### (Saccharification treatment)

The saccharification treatment is carried out by maintaining maische at a given temperature for a certain period of time utilizing an enzyme derived from the starch raw material and an enzyme added.

Preparation of maische can be carried out by a conventional method such as a method of maintaining the temperature at 35°C or more and 70°C or less and the time for 20 minutes or more and 90 minutes or less.

The temperature and the time of the saccharification treatment can be appropriately adjusted taking into consideration the type and the amount of the starch raw material and the like, the type and the amount of the enzyme added, the amount of maische, the quality of the desired fermented beverage, etc.

For example, the saccharification treatment can be carried out by gradually heating the maische and maintaining it at 50°C or more and 72°C or less for 30 minutes or more and 90 minutes or less.

When two or more enzymes are added as the enzymes for hydrolyzing dextrin, it is preferable that after addition of enzymes for hydrolyzing dextrin to maische, the maische should be heated step by step and maintained near the optimum temperature for each enzyme.

After the saccharification treatment, it is preferable that the maische should be maintained at 76°C or more and 78°C or less for about 10 minutes to deactivate the enzyme, and then the maische having been subjected to saccharification treatment should be filtered in a malt filtration tank to obtain transparent wort as a saccharified liquid.

The obtained saccharified liquid (wort) is boiled. The boiling method and the conditions therefor can be appropriately determined. Before the boiling treatment or during the boiling treatment, herbs, fragrances, etc. are appropriately added, and thereby a fermented beverage having a desired taste can be produced.

In the present invention, it is preferable to add hops before the boiling treatment or during the boiling treatment. By carrying out boiling treatment in the presence of hops, a flavor and a fragrance of hops can be extracted by boiling. The additive amount of hops, the mode of addition (for example, hops are added in several batches), and the boiling conditions can be appropriately determined.

The boiled saccharified liquid (wort) is preferably transferred into a tank called whirlpool to remove spent hops, coagulated protein, and the like produced by boiling. Thereafter, the saccharified liquid is cooled down to an appropriate fermentation temperature with a plate cooler to obtain a cooled saccharified liquid (wort). The fermentation temperature is usually 8°C or more and 15°C or less.

### <Fermentation step>

The production method of the present invention includes a fermentation step of fermenting the obtained saccharified liquid with yeast to obtain a fermented liquid (hereinafter, also referred to simply as a "fermentation step").

In the fermentation step, it is preferable that the cooled saccharified liquid (wort) obtained in the preparation step should be inoculated with yeast and transferred into a fermentation tank to carry out fermentation.

The yeast for use in the fermentation is not particularly restricted, and can be appropriately selected from among yeasts usually used for the production of alcoholic liquors and used. The yeast for use in the fermentation may be top-fermenting yeast or bottom-fermenting yeast, but from the viewpoint of ease of application to a large brewing facility, bottom-fermenting yeast is preferable.

In the present invention, by suppressing alcohol fermentation in the fermentation step, the amount of an alcohol produced by fermentation is more decreased, and therefore, low-alcohol beers having an alcohol concentration of less than 4 vol% or non-alcoholic beers having an alcohol concentration of less than 1 vol% can be more easily produced.

In a maturation step in the production method of the present invention, the resulting fermented liquid is matured in a maturation tank and stored under the low-temperature conditions of about 0°C to stabilize it, then in a filtration step, the fermented liquid after maturation is filtered, and thereby, yeast, protein, etc. can be removed.

The production method of the present invention may include a step of removing an alcohol from the resulting fermented liquid (hereinafter, also referred to as a "dealcoholization step") from the viewpoint of decreasing the alcohol concentration. Removal of an alcohol can be carried out by a conventional method such as a vacuum distillation method or a reverse osmosis membrane method.

It is preferable to carry out the dealcoholization step prior to the dilution step. That is to say, when the production method of the present invention includes the dealcoholization step, a dealcoholized fermented liquid obtained by removing an alcohol from the fermented liquid is preferably subjected to the dilution step.

### <Dilution step>

From the viewpoint of adjusting a balance of the intensity of grain aroma, the production method of the present invention includes a dilution step of diluting the resulting fermented liquid with water (hereinafter, also referred to simply as a "dilution step"). In the dilution step, by adding water or carbonated water to the fermented liquid and mixing them, a fermented beverage can be obtained.

Dilution of the fermented liquid in the dilution step can be appropriately adjusted according to the raw wort extract concentration, the alcohol concentration, the real extract concentration, etc. desired for a product, but the dilution is preferably carried out so that the raw wort extract concentration will be adjusted to less than 10 mass%.

The dilution ratio is preferably 1.1 times or more and 6 times or less, more preferably 1.2 times or more, even more preferably 1.3 times or more, and more preferably 4 times or less, even more preferably 2 times or less.

According to the production method of the present invention, the dilution ratio can be made higher as compared with that in a usual method for producing a beer-taste beverage, and therefore, the yield can also be improved.

In the present invention, for example, by mixing the resulting liquid with sprits in the fermentation step using yeast or any step thereafter, liqueurs in the Japanese Liquor Tax Act can also be produced.

In a filling step, a container, such as a can, a bottle, or a barrel, is usually filled with the fermented beverage obtained by the production method of the present invention, and then the beverage is shipped as a product.

### [Fermented beverage]

The fermented beverage of the present invention is preferably a beer-taste beverage.

In the present invention, the "beer-taste beverage" refers to a fermented beverage having a beer flavor, regardless of the content of an alcohol. Specific examples of the beer-taste beverages include beers, law-malt beers, quasi-beers (among sparking alcoholic beverages, alcoholic beverages using hops as parts of raw materials and not corresponding to beers or low-malt beers), low-alcohol beers, and non-alcoholic beers.

The alcohol concentration of the fermented beverage of the present invention is preferably less than 4.0 vol%. In this case, the fermented beverage of the present invention can be a low-alcohol beer having an alcohol concentration of less than 4.0 vol% or a non-alcoholic beer having an alcohol concentration of less than 1.0 vol%.

The alcohol concentration is represented by a percentage of the volume of an alcohol contained in the fermented beverage to the volume of the whole fermented beverage, and is measured in accordance with the method prescribed in Revised Methods of Analysis of BCOJ, Beer (method described in "8.3 Alcohol" of "Methods of Analysis of BCOJ (2013 Revised Edition), Beer").

From the viewpoint of adjusting a balance of the intensity of grain aroma, the raw wort extract concentration of the fermented beverage of the present invention is preferably 1.0 mass% or more and less than 10 mass%, more preferably 9.5 mass% or less, even more preferably 9.0 mass% or less, and more preferably 3.0 mass% or more, even more preferably 5.0 mass% or more, even much more preferably 7.0 mass% or more.

The raw wort extract concentration is measured in accordance with the method prescribed in Revised Methods of Analysis of BCOJ, Beer (method described in "8.5 Extract Relational Calculation Method" of "Methods of Analysis of BCOJ (2013 Revised Edition), Beer").

The dextrin concentration of the fermented beverage of the present invention is preferably 0.5 g/L or more and 10.0 g/L or less, more preferably 7.0 g/L or less, even more preferably 5.0 g/L or less, and more preferably 1.0 g/L or more, even more preferably 2.0 g/L or more.

From the viewpoint of enhancing a body feeling, the dextrin concentration of the fermented beverage of the present invention is preferably the above-mentioned upper limit or less, and from the viewpoint of productivity, it is preferably the above-mentioned lower limit or more.

The dextrin concentration is measured as an analytical value of a saccharide having a molecular weight larger than that of maltohexaose in the method for measuring the content of each saccharide described in Examples.

From the viewpoint of enhancing a body feeling, the fermented beverage of the present invention preferably contains an oligosaccharide in which 2 or more and 6 or less glucoses are bonded, and more preferably contains one or more oligosaccharides selected from the group consisting of maltose, maltotriose, maltotetraose, maltopentaose, and maltohexaose.

From the viewpoint of enhancing a body feeling, the total content of oligosaccharides in which 2 or more and 6 or less glucoses are bonded in the fermented beverage of the present invention is preferably 20 g/L or more and 45 g/L or less, more preferably 25 g/L or more, even more preferably 30 g/L or more, even much more preferably 33 g/L or more, and more preferably 40 g/L or less, even more preferably 35 g/L or less.

The total content of oligosaccharides in which 2 or more and 6 or less glucoses are bonded in the fermented beverage of the present invention is the sum of contents (g/L) of each oligosaccharide measured by the method described in Examples.

From the viewpoint of enhancing a body feeling, a ratio of the total content (g/L) of oligosaccharides in which 2 or more and 6 or less glucoses are bonded to the dextrin concentration (g/L) in the fermented beverage of the present invention, [total content of oligosaccharides in which 2 or more and 6 or less glucoses are bonded/dextrin concentration], is preferably 3 or more and 15 or less, more preferably 5 or more, even more preferably 7 or more, even much more preferably 9 or more, and more preferably 13 or less, even more preferably 11 or less.

From the viewpoint of enhancing a body feeling, the total content of one or more oligosaccharides selected from the group consisting of maltose, maltotriose, maltotetraose, maltopentaose, and maltohexaose in the fermented beverage of the present invention is preferably 20 g/L or more and 45 g/L or less, more preferably 25 g/L or more, even more preferably 30 g/L or more, even much more preferably 33 g/L or more, and more preferably 40 g/L or less, even more preferably 35 g/L or less.

The total content of one or more oligosaccharides selected from the group consisting of maltose, maltotriose, maltotetraose, maltopentaose, and maltohexaose in the fermented beverage of the present invention is the sum of contents (g/L) of each oligosaccharide measured by the method described in Examples.

From the viewpoint of enhancing a body feeling, a ratio of the total content (g/L) of one or more oligosaccharides selected from the group consisting of maltose, maltotriose, maltotetraose, maltopentaose, and maltohexaose to the dextrin concentration (g/L) in the fermented beverage of the present invention, [total content of one or more oligosaccharides selected from the group consisting of maltose, maltotriose, maltotetraose, maltopentaose, and maltohexaose/dextrin concentration], is preferably 3 or more and 15 or less, more preferably 5 or more, even more preferably 7 or more, even much more preferably 9 or more, and more preferably 13 or less, even more preferably 11 or less.

From the viewpoint of enhancing a body feeling, the degree of sweetness of the fermented beverage of the present invention is preferably 5 or more and 25 or less, more preferably 7 or more, even more preferably 9 or more, and more preferably 20 or less, even more preferably 15 or less.

In the present invention, the "degree of sweetness of the fermented beverage" is calculated as the sum of values, each of which is obtained by multiplying a degree of sweetness of each saccharide contained in the fermented beverage when the degree of sweetness of sucrose is 1, by a content (g/L) of each saccharide in the fermented beverage.

As described above, the fermented beverage of the present invention preferably has an alcohol concentration of less than 4.0 vol%, a raw wort extract concentration of less than 10 mass%, a dextrin concentration of 10.0 g/L or less, and a degree of sweetness of 5 or more.

### Examples

Next, the present invention will be described in more detail with reference to Examples, but the present invention is not limited thereto. Various measurements were carried out as follows.

### <Measurement of raw wort extract concentration>

Measurement of a raw wort extract concentration was carried out in accordance with the method prescribed in Revised Methods of Analysis of BCOJ, Beer (method described in "8.5 Extract Relational Calculation Method" of "Methods of Analysis of BCOJ (2013 Revised Edition), Beer").

### <Measurement of alcohol concentration>

Measurement of an alcohol concentration was carried out in accordance with the method prescribed in Revised Methods of Analysis of BCOJ, Beer (method described in "8.3 Alcohol" of "Methods of Analysis of BCOJ (2013 Revised Edition), Beer").

### <Measurement of real extract concentration>

Measurement of a real extract was carried out in accordance with the method prescribed in Revised Methods of Analysis of BCOJ, Beer (method described in "8.4 Real Extract" of "Methods of Analysis of BCOJ (2013 Revised Edition), Beer").

### <Measurement of content of each saccharide>

A content (g/L) of each saccharide in the fermented beverage was measured by high-performance liquid chromatography.

### (HPLC conditions)

Apparatus: high-performance liquid chromatograph "LC-20A" (manufactured by Shimadzu Corporation)
Column: column for saccharide analysis "Aminex HPX-42A" (300 × 7.8 mm, manufactured by Bio-Rad Laboratories, Inc.)
Column temperature: 80°C
Detector: differential refractometer detector
Mobile phase: ultrapure water
Flow rate: 0.5 mL/min
Preparation of sample: The fermented beverage was diluted with ultrapure water (Milli-Q water) and then filtered through a filter of 0.45 µm to obtain a sample.
Sample injection quantity: 5 µL

As saccharides, reagents of D(-)-fructose, D(+)-glucose, maltose monohydrate, maltotriose, maltotetraose, maltopentaose, and maltohexaose were used, and the same positions as peaks of the reagents were regarded as fructose, glucose, maltose, maltotriose, maltotetraose, maltopentaose, and maltohexaose, respectively.

Because of the characteristics of the present analysis method, separation of branched chain saccharides is not carried out. On this account, the analytical value of maltose is a total amount of maltose, isomaltose, trehalose, kojibiose, and nigerose; the analytical value of maltotriose is a total amount of maltotriose, isomaltotriose, and panose; the analytical value of maltotetraose is a total amount of maltotetraose and isomaltotetraose; the analytical value of maltopentaose is a total amount of maltopentaose and isomaltopentaose; and the analytical value of maltohexaose is a total amount of maltohexaose and isomaltohexaose.

The analytical value of a saccharide having a larger molecular weight than maltohexaose was measured as that of a high polymerization degree fraction (dextrin).

### <Calculation of degree of sweetness of fermented beverage>

The sum of values, each of which was obtained by multiplying a degree of sweetness (numerical value in parentheses shown in Table 1 and Table 2) of each saccharide contained in the fermented beverage when the degree of sweetness of sucrose was 1, by a content (g/L) of each saccharide in the fermented beverage, was calculated as a degree of sweetness of the fermented beverage.

### [Example 1]

To hot water a hardness of which had been adjusted, 20 kg of a crushed material of malt and 20 kg of cornstarch were added as starch raw materials so that a ratio by mass of the amount of raw material water used to the amount of the starch raw materials used (supplied hot water ratio) would become 4, then they were mixed, thereafter 4 g of a composite enzyme of pullulanase, heat-resistant α-amylase, and maltogenic α-amylase ("Ceremix (registered trademark) Flex" manufactured by Novozymes A/S) based on 1 kg of the starch raw materials and 4 g of transglucosidase (Transglucosidase L "Amano" manufactured by Amano Enzyme Inc.) based on 1 kg of the starch raw materials were added, they were heated according to a three-stage diagram of 50°C for 30 minutes, 64.5°C for 45 minutes, and 70°C for 10 minutes to perform saccharification treatment, and thereafter, enzyme deactivation was carried out at 76°C to obtain maische having been subjected to saccharification treatment.

The maische having been subjected to saccharification treatment was filtered, the resulting saccharified liquid (wort) was placed in a boiling pot, and water was added so that the raw wort extract concentration would become 12 mass%. Subsequently, appropriate amounts of hops were added, then boiling was carried out for 70 minutes, thereafter adjustment by adding water was carried out so that the raw wort extract concentration would become 12 mass%, then solid-liquid separation was carried out in a whirlpool (swirling separation tank), and thereafter the wort was cooled with a heat exchanger.

Subsequently, yeast was added to the cooled wort to perform fermentation, thereby obtaining a fermented liquid.

The resulting fermented liquid was subjected to dilution in accordance with a raw wort extract concentration desired for a product and subjected to clarification by filtration to obtain a fermented beverage.

### [Comparative Example 1]

A fermented beverage was obtained in the same manner as in Example 1, except that the composite enzyme of pullulanase, heat-resistant α-amylase, and maltogenic α-amylase was not added, and the dilution ratio for diluting the fermented liquid was changed so that the alcohol concentration would become the same as in Example 1.

### [Comparative Example 2]

Using a fermented liquid obtained in the same manner as in Comparative Example 1, a fermented beverage was obtained by changing the dilution ratio so that the raw wort extract concentration would become the same as in Example 1.

Regarding the fermented beverages obtained, the raw wort extract concentration, the alcohol concentration, the real extract concentration, and the content of each saccharide were measured, and the degree of sweetness was calculated. The results are set forth in Table 1. Fig. 1 shows the content of each saccharide in the fermented beverages of Example 1, Comparative Example 1, and Comparative Example 2.

In addition, the following organoleptic evaluation of grain aroma and a body feeling was carried out by 10 beer expert panelists.

### <Organoleptic evaluation of grain aroma and body feeling>

Using a commercially available regular beer (pilsner beer having alcohol concentration of 5 vol%) as a reference, whether the intensities of grain aroma and a body feeling are equal to or not was examined, then according to the degree thereof, evaluation based on the following evaluation criteria was carried out by each expert panelist, then an average value of the 10 expert panelists was rounded off to the first decimal place, and the resulting value is set forth in Table 1 as an evaluation point.

### [Evaluation criteria]

4: The intensities are equal to those of the commercially available regular beer.
3: The intensities are almost equal to those of the commercially available regular beer.
2: The intensities are somewhat inferior to those of the commercially available regular beer.
1: The intensities are considerably inferior to those of the commercially available regular beer.

### [Table 1]

**Table 1**

| | | Example 1 | Comparative Example 1 | Comparative Example 2 |
|---|---|---|---|---|
| Raw wort extract concentration [mass%] | | 8.5 | 10.0 | 8.5 |
| Alcohol concentration [vol%] | | 3.1 | 3.1 | 2.6 |
| Real extract concentration [mass%] | | 3.8 | 5.4 | 4.6 |
| Content of each saccharide [g/L]*¹ | Fructose (1.73) | 0.0 | 0.0 | 0.0 |
| | Glucose (0.70) | 0.6 | 0.7 | 0.6 |
| | Maltose (0.40) | 11.0 | 9.7 | 8.2 |
| | Maltotriose (0.32) | 12.7 | 9.0 | 7.7 |
| | Maltotetraose (0.20) | 5.7 | 7.5 | 6.4 |
| | Maltopentaose (0.18) | 2.5 | 5.0 | 4.2 |
| | Maltohexaose (0.10) | 1.3 | 6.8 | 5.8 |
| | High polymerization degree fraction (dextrin) | 3.4 | 19.9 | 16.9 |
| Total content of saccharides [g/L] | | 37.2 | 58.6 | 49.8 |
| Degree of sweetness | | 10.6 | 10.4 | 8.8 |
| Evaluation | Grain aroma | 4 | 1 (excess) | 4 |
| | Body feeling | 4 | 4 | 2 (insufficiency) |
| Production volume (relative value when Comparative Example 1 is taken as 100) | | 118 | 100 | 118 |

| | | | | |
|---|---|---|---|---|
| *1: The numerical value in parentheses of each saccharide indicates a degree of sweetness when the degree of sweetness of sucrose is 1. | | | | |

Table 1 shows that the fermented beverage of Comparative Example 1 has a body feeling but has excessively intense grain aroma and loses a balance as a beer-taste beverage. Since the fermented beverage of Comparative Example 2 was obtained by further diluting the fermented beverage of Comparative Example 1, it has intensity of grain aroma suitable for a beer-taste beverage but has a poor body feeling.

On the other hand, Table 1 and Fig. 1 show that the fermented beverage of Example 1 has intensities of grain aroma and a body feeling suitable for a beer-taste beverage though the total content of saccharides therein is low as compared with the fermented beverages of Comparative Example 1 and Comparative Example 2. The reason for this is thought to be that in the preparation step, an enzyme for hydrolyzing dextrin was added, therefore, as shown in Fig. 1, the dextrin concentration was decreased, but the body feeling was enhanced because oligosaccharide having a relatively high degree of sweetness was produced, moreover inclusion of a dilution step of diluting the resulting fermented liquid with water made it possible to adjust the intensity of grain aroma to optimum, and therefore, a fermented beverage excellent in a balance of the intensity of grain aroma and a body feeling was obtained.

In addition, it can be seen from Table 1 that in Example 1, inclusion of a dilution step of diluting the resulting fermented liquid with water makes it possible to adjust the intensity of grain aroma to optimum, and therefore, it becomes possible to produce a larger amount of a fermented beverage from the same input amount of the raw material while the fermented beverage has a body feeling nearly equal to that of Comparative Example 1, and the yield can also be improved.

### [Example 2, Comparative Example 3, Comparative Example 4]

In the production of each of the fermented beverages of Example 1, Comparative Example 1, and Comparative Example 2, the fermented liquid obtained was sprayed into a degassing tank under reduced pressure in the vicinity of 90 mbar to remove carbon dioxide gas and then heated to near 50°C using a plate cooler. Thereafter, in a vacuum column of a pressure in the vicinity of 90 mbar, the fermented liquid was brought into contact with water vapor heated to near 50°C to allow the water vapor to adsorb a volatile component, and thereby, an alcohol and the volatile component were removed to obtain a dealcoholized fermented liquid having an alcohol concentration of 0.5 vol% or 0.4 vol%.

To the dealcoholized fermented liquid obtained, deaerated water was added to dilute the fermented liquid so that the real extract concentrations would become similar to those of Example 1, Comparative Example 1, and Comparative Example 2, and carbon dioxide gas was dissolved so that the gas pressure would become 2.9 gas volume, thereby obtaining fermented beverages.

Regarding the fermented beverages obtained, the alcohol concentration, the real extract concentration, and the content of each saccharide were measured, and the degree of sweetness was calculated, in the same manner as in Example 1, Comparative Example 1, and Comparative Example 2. The results are set forth in Table 2.

In addition, organoleptic evaluation of grain aroma and a body feeling was carried out by 10 beer expert panelists in the same manner as previously described.

### [Table 2]

**Table 2**

| | | Example 2 | Comparative Example 3 | Comparative Example 4 |
|---|---|---|---|---|
| Alcohol concentration [vol%] | | 0.5 | 0.5 | 0.4 |
| Real extract concentration [mass%] | | 3.8 | 5.4 | 4.6 |
| Content of each saccharide [g/L]*¹ | Fructose (1.73) | 0.0 | 0.0 | 0.0 |
| | Glucose (0.70) | 0.6 | 0.7 | 0.6 |
| | Maltose (0.40) | 11.0 | 9.7 | 8.2 |
| | Maltotriose (0.32) | 12.7 | 9.0 | 7.7 |
| | Maltotetraose (0.20) | 5.7 | 7.5 | 6.4 |
| | Maltopentaose (0.18) | 2.5 | 5.0 | 4.2 |
| | Maltohexaose (0.10) | 1.3 | 6.8 | 5.8 |
| | High polymerization degree fraction (dextrin) | 3.4 | 19.9 | 16.9 |
| Total content of saccharides [g/L] | | 37.2 | 58.6 | 49.8 |
| Degree of sweetness | | 10.6 | 10.4 | 8.8 |
| Evaluation | Grain aroma | 3 | 1 (excess) | 3 |
| | Body feeling | 3 | 3 | 2 (insufficiency) |
| Production volume (relative value when Comparative Example 1 is taken as 100) | | 118 | 100 | 118 |

| | | | | |
|---|---|---|---|---|
| *1: The numerical value in parentheses of each saccharide indicates a degree of sweetness when the degree of sweetness of sucrose is 1. | | | | |

Example 2, Comparative Example 3, and Comparative Example 4 are examples in which the alcohol concentration was further decreased through the dealcoholization step as compared with Example 1, Comparative Example 1, and Comparative Example 2, and the fermented beverage of Example 2 has grain aroma and a body feeling both having intensities more suitable for a beer-taste beverage as compared with the fermented beverages of Comparative Example 3 and Comparative Example 4, in spite of its low total content of saccharides. From this, it can be seen that even when the alcohol concentration is decreased, a tendency similar to that of Example 1, Comparative Example 1, and Comparative Example 2 is exhibited.

### Industrial Applicability

According to the present invention, a fermented beverage that is excellent in a balance of the intensity of grain aroma and a body feeling even with its low alcohol concentration can be obtained, and the method for producing the same is widely applicable to methods for producing beer-taste beverages such as low-alcohol beer taste beverages and non-alcoholic beer-taste beverages. In addition, these beer-taste beverages can also meet the needs of consumers as beverages that are generally drunk as substitutes for beers when beers having high alcohol concentrations cannot be drunk.

## Claims

1. A method for producing a fermented beverage, comprising
a preparation step of obtaining a saccharified liquid from a starch raw material,
a fermentation step of fermenting the obtained saccharified liquid with yeast to obtain a fermented liquid, and
a dilution step of diluting the obtained fermented liquid with water,
wherein, in the preparation step, an enzyme for producing a non-assimilable sugar from an assimilable sugar and an enzyme for hydrolyzing dextrin are added.

2. The method for producing a fermented beverage according to claim 1, wherein the non-assimilable sugar is isomalto-oligosaccharide.

3. The method for producing a fermented beverage according to claim 1 or 2, wherein the enzyme for producing a non-assimilable sugar from an assimilable sugar comprises transglucosidase.

4. The method for producing a fermented beverage according to any one of claims 1 to 3, wherein the enzyme for hydrolyzing dextrin comprises at least one selected from the group consisting of an enzyme for hydrolyzing an α-1,6 glucoside bond of dextrin and an enzyme for hydrolyzing an α-1,4 glucoside bond of dextrin.

5. The method for producing a fermented beverage according to claim 4, wherein the enzyme for hydrolyzing an α-1,6 glucoside bond of dextrin comprises pullulanase.

6. The method for producing a fermented beverage according to claim 4, wherein the enzyme for hydrolyzing an α-1,4 glucoside bond of dextrin comprises maltogenic α-amylase.

7. The method for producing a fermented beverage according to claim 4, wherein the enzyme for hydrolyzing an α-1,4 glucoside bond of dextrin comprises heat-resistant α-amylase.

8. The method for producing a fermented beverage according to any one of claims 1 to 7, wherein the starch raw material comprises malt.

9. The method for producing a fermented beverage according to any one of claims 1 to 8, wherein the fermented beverage is a beer-taste beverage.

10. The method for producing a fermented beverage according to any one of claims 1 to 9, wherein the fermented beverage has an alcohol concentration of less than 4.0 vol%.

11. The method for producing a fermented beverage according to any one of claims 1 to 10, wherein, in the dilution step, a raw wort extract concentration is adjusted to less than 10 mass%.

12. The method for producing a fermented beverage according to any one of claims 1 to 11, wherein the fermented beverage has a dextrin concentration of 10.0 g/L or less.

13. The method for producing a fermented beverage according to any one of claims 1 to 12, wherein the fermented beverage has a degree of sweetness of 5 or more.

14. The method for producing a fermented beverage according to any one of claims 1 to 13, comprising a step of removing an alcohol from the fermented liquid.

15. A fermented beverage having
an alcohol concentration of less than 4.0 vol%,
a raw wort extract concentration of less than 10 mass%,
a dextrin concentration of 10.0 g/L or less, and
a degree of sweetness of 5 or more.
